Europäisches Patentamt

European Patent Office

Office européen des brevets

(19)

(11) Numéro de publication : **0 099 767**
**B1**

(12) # FASCICULE DE BREVET EUROPÉEN

(45) Date de publication du fascicule du brevet :
30.10.85

(21) Numéro de dépôt : 83401139.7

(22) Date de dépôt : 03.06.83

(51) Int. Cl.⁴ : **B 41 F 31/30**

(54) **Dispositif d'encrage pour machine d'impression.**

(30) Priorité : 04.06.82 FR 8209773

(43) Date de publication de la demande :
01.02.84 Bulletin 84/05

(45) Mention de la délivrance du brevet :
30.10.85 Bulletin 85/44

(84) Etats contractants désignés :
BE CH DE FR GB LI SE

(56) Documents cités :
DE-A- 1 561 091
DE-A- 2 062 758
DE-A- 2 343 099
FR-A- 1 584 975
GB-A-   985 810

(73) Titulaire : **CREUSOT-LOIRE**
**42 rue d'Anjou**
**F-75008 Paris (FR)**

(72) Inventeur : **Barras, François**
**9 allée des Pouillots**
**F-44240 La Chapelle sur Erdre (FR)**
Inventeur : **Ducournau, Alain**
**322 route des Landes de la Plée**
**F-44415 Basse Goulaine (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

## Description

La présente invention concerne un perfectionnement apporté à un dispositif d'encrage d'une machine d'impression.

Dans la machine d'impression rotative, l'encrage du cylindre de plaque s'effectue à partir d'un encrier, par l'intermédiaire d'une série de rouleaux tournants en contact les uns avec les autres. Certains de ces rouleaux peuvent être en outre animés d'un mouvement alternatif le long de leur axe de rotation et sont appelés dans ce cas « tables baladeuses ». Les autres rouleaux intermédiaires sont appelés « rouleaux d'encrage ». Chaque rouleau d'encrage se trouve par conséquent en contact avec deux autres cylindres, ces cylindres pouvant être, soit le rouleau preneur d'encre, soit les tables baladeuses, soit le cylindre de plaque. Durant le fonctionnement de la machine, il est nécessaire de contrôler avec précision la force avec laquelle chaque rouleau d'encrage vient en contact avec les autres cylindres. Lors de l'arrêt de la machine, il peut se produire, dans ces conditions un marquage des rouleaux ou du cylindre de plaque au niveau des génératrices de contact correspondantes. Pour remédier à cet inconvénient, il a déjà été proposé des dispositifs permettant le déplacement de l'axe de chaque rouleau d'encrage afin d'éloigner, lors de l'arrêt de la machine, le rouleau d'encrage d'au moins l'un des deux rouleaux sur lesquels il vient normalement en contact.

Un tel dispositif connu, permettant un tel déplacement du rouleau d'encrage, consiste à monter le rouleau d'encrage pivotant autour de l'axe de rotation de la table baladeuse avec laquelle il est en contact. Le rouleau d'encrage est alors monté à chaque extrémité, par l'intermédiaire de paliers rotatifs, sur une pièce rigide massive montée elle-même rotative autour du palier fixe de la table baladeuse correspondante.

On peut s'apercevoir qu'un tel montage mécanique comporte un grand nombre de pièces rigides et massives, difficiles à usiner et, par conséquent, onéreuses. D'autre part, comme la longueur des rouleaux est importante, le pivotement des deux pièces disposées aux deux extrémités risque de ne pas être parfaitement simultané, entraînant ainsi un risque de coincement de l'ensemble mécanique. D'autre part, ces pièces pivotantes doivent être bien ajustées sur les paliers fixes pour éviter les déplacements longitudinaux des rouleaux entraînés par les mouvements de va-et-vient de la table, et dans ce cas, il se produit rapidement un encrassement par l'encre des articulations des pièces pivotantes et un risque de coincement.

On connaît également dans le FR-A-1 584 975 une machine d'impression dans laquelle un rouleau d'encrage est mis en contact de roulement avec deux autres rouleaux dont l'un est constitué par une table baladeuse, ce rouleau d'encrage étant monté pivotant à l'aide de bras autour de l'axe de rotation de cette table baladeuse et d'autre part rotatif autour d'un axe et la table baladeuse étant supportée par deux paliers fixes comportant, chacun, une face externe cylindrique.

L'invention concerne donc un perfectionnement à ce type de machine d'impression.

Selon une caractéristique essentielle de l'invention, chaque extrémité de l'arbre du rouleau d'encrage est reliée à chaque palier fixe correspondant par l'intermédiaire d'une bande métallique flexible recourbée en forme de U dont la zone centrale entoure partiellement la face cylindrique externe du palier fixe en y étant fixée et dont les deux extrémités sont fixées sur les extrémités de l'arbre du rouleau d'encrage.

D'autres caractéristiques et avantages de cette invention apparaîtront lors de la description détaillée de l'exemple de réalisation qui va suivre, illustré par les dessins annexés.

La figure 1 représente le dispositif de pivotement conforme à l'invention en coupes partielles transversales A-A et B-B.

La figure 2 représente le même dispositif en coupe longitudinale selon C-C.

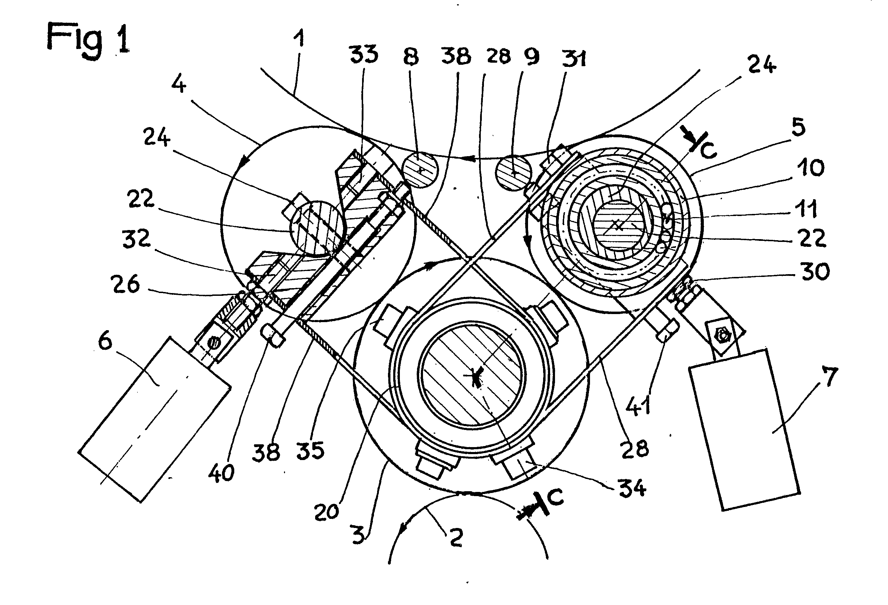

En se référant à la figure 1, on distingue un certain nombre de rouleaux faisant partie de l'ensemble des rouleaux destinés à l'encrage du cylindre de plaque 1. Plus précisément, on distingue, schématiquement, un rouleau transmetteur 2 en contact avec une table baladeuse 3, elle-même en contact avec deux rouleaux toucheurs d'encrage 4 et 5, ces rouleaux toucheurs étant eux-mêmes en contact avec le cylindre de plaque 1. La table baladeuse 3 tourne avec les différents rouleaux 2, 4 et 5, et est animée en même temps d'un mouvement longitudinal de va-et-vient afin d'améliorer l'uniformité de la couche d'encre déposée sur le cylindre de plaque. Durant le fonctionnement de la machine d'impression, les rouleaux toucheurs 4 et 5 sont en contact à la fois avec la table baladeuse 3 et le cylindre de plaque 1. Lors d'un arrêt de la machine, il est préférable de supprimer tout contact entre les rouleaux et le cylindre de plaque 1. Pour réaliser cela, les rouleaux 4 et 5 sont montés pivotants autour de l'axe de rotation de la table baladeuse 3. Des vérins pneumatiques 6 et 7 assurant le déplacement pivotant des rouleaux 4 et 5. Lors du fonctionnement de la machine, les pistons 6 et 7 exercent une action sur les rouleaux 4 et 5 afin de les mouvoir en direction du cylindre de plaque 1, le mouvement étant toutefois limité par des butées 8 et 9. Lors de l'arrêt de la machine, les vérins 6 et 7 sont actionnés en sens inverse afin d'écarter les rouleaux 4 et 5 du cylindre de plaque 1. Il est possible aussi d'arrêter simplement l'action des vérins 6 et 7, l'écartement des rouleaux 4 et 5 s'effectuant dans ce cas simplement par l'action de leur propre poids.

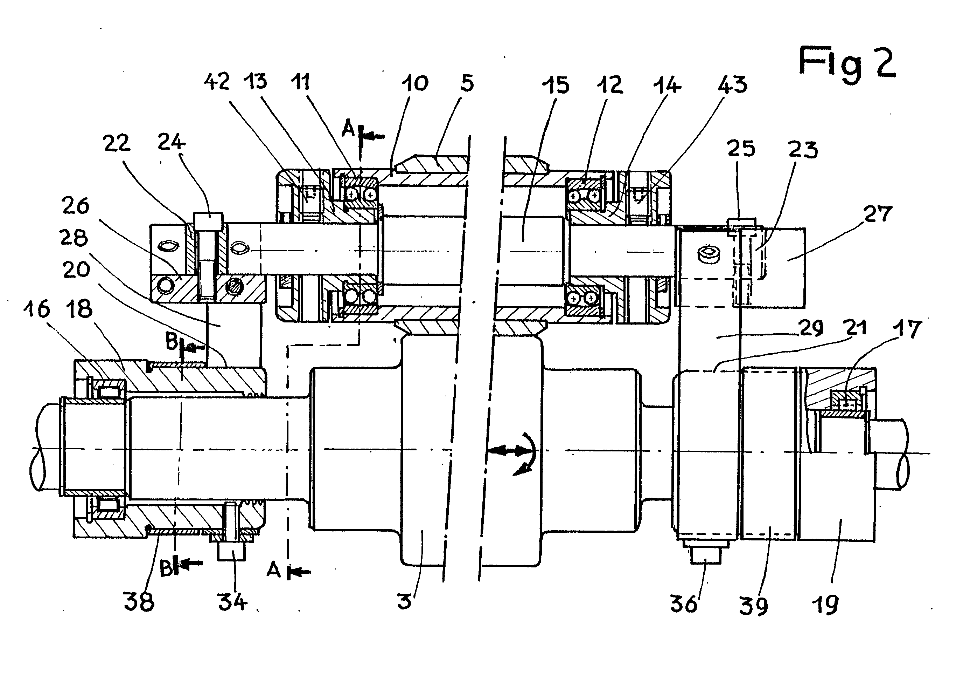

Le dispositif permettant le pivotement des rouleaux 4 et 5 autour de l'axe de la table baladeuse 3 va être décrit maintenant, en se référant à la fois aux figures 1 et 2. Les rouleaux toucheurs 4 et 5 sont constitués d'un cylindre en matière élastomère disposé autour d'un cylindre métallique creux 10 lui-même rotatif par l'intermédiaire de roulements 11, 12, sur des pièces 13, 14 montées de façon excentrée sur l'une et l'autre des extrémités d'un arbre fixe en rotation 15. La table baladeuse 3 est supportée par l'intermédiaire de roulements 16, 17 sur des paliers fixes 18, 19. Ces paliers fixes 18, 19 comportent une face externe cylindrique 20, 21 disposées en face des deux extrémités 22, 23 de l'arbre 15. Sur ces extrémités 22 et 23 de l'arbre 15, sont fixées, par l'intermédiaire de vis 24, 25, des pièces de fixation 26, 27. Le dispositif de liaison pivotante reliant le rouleau 5 à l'axe de la table baladeuse 3 est réalisé à l'aide de deux bandes métalliques 28, 29 recourbées en forme de U, dont la zone centrale entoure partiellement, respectivement la face cylindrique 20 du palier fixe 18 et la face cylindrique 21 du palier fixe 19. Les deux extrémités de chacune de ces deux bandes métalliques sont fixées respectivement sur les pièces de fixation 26 et 27 à l'aide de vis 30, 31, 32, 33. Les vis 30 et 32 peuvent servir en même temps à relier la tige des vérins 6 et 7 avec les pièces de fixation respectives 26 et 27. Les bandes métalliques 20, 21 sont fixées sur les paliers 18, 19 à l'aide de vis 34, 35, 36, 37, ces vis étant positionnées sur les paliers à l'intérieur de la demi-zone circonférentielle en contact avec les bandes métalliques. Si la largeur des pièces de fixation 26, 27 est sensiblement égale au diamètre des faces cylindriques 20, 21 des paliers fixes, les brins tendus des bandes métalliques sont sensiblement parallèles, et par conséquent, l'axe de l'arbre 15 peut pivoter en suivant pratiquement un arc-de-cercle centré autour de l'axe de la table baladeuse 3.

Les faces cylindriques 20, 21 des paliers fixes sont suffisamment longues pour recevoir les autres bandes métalliques 38, 39 destinées à la fixation du second rouleau toucheur 4. Les pièces de fixation 26, 27 sont aussi prévues suffisamment larges pour pouvoir être utilisées indifféremment pour la fixation des bandes métalliques 28, 29 ou 38, 39.

Le réglage de la force de contact entre les rouleaux 4 ou 5 et le cylindre de la plaque 1 peut s'effectuer par la manœuvre de vis de réglage 40, 41 venant en contact avec les butées respectives 8, 9. Le réglage de la force de contact entre les rouleaux 4, 5 et la table baladeuse 3 peut s'effectuer en débloquant les vis 42, 43 et en exerçant une rotation des paliers excentrés 13, 14 afin de régler la distance séparant l'axe de rotation des rouleaux 4, 5 et l'axe de la table baladeuse 3.

## Revendications

1. Dispositif d'encrage pour machine d'impression dans laquelle au moins un rouleau d'encrage (4, 5) est mis en contact de roulement avec deux autres rouleaux (1, 3) dont l'un est constitué par une table baladeuse (3), ce rouleau d'encrage étant monté pivotant autour de l'axe de rotation de cette table baladeuse et d'autre part rotatif autour d'un arbre (15) et la table baladeuse étant supportée par deux paliers fixes (18, 19) comportant, chacun, une face externe cylindrique (20, 21), caractérisé par le fait que chaque extrémité (22, 23) de l'arbre (15) du rouleau d'encrage (4, 5) est reliée à chaque palier fixe (18, 19) correspondant par l'intermédiaire d'une bande métallique flexible (28, 29), recourbée en forme de U, dont la zone centrale entoure partiellement la face cylindrique du palier fixe en y étant fixée et dont les deux extrémités sont fixées sur les extrémités (22, 23) de l'arbre (15) du rouleau d'encrage.

2. Dispositif d'encrage pour machine d'impression selon la revendication 1, caractérisé par le fait que les extrémités des bandes métalliques (28, 29) sont fixées aux extrémités de l'arbre (15) par l'intermédiaire d'une pièce de fixation (26, 27), et que la largeur de cette pièce (26, 27) est sensiblement égale au diamètre de la face externe cylindrique (20, 21) des paliers fixes, de façon que les brins tendus des bandes métalliques soient sensiblement parallèles.

3. Dispositif d'encrage pour machine d'impression selon l'une quelconque des revendications 1 ou 2, caractérisé par le fait que les bandes métalliques (28, 29) sont fixées par des vis (34, 35, 36, 37) aux paliers correspondants (18, 19), ces vis étant disposées sur les paliers dans la zone des faces cylindriques (20, 21) restant toujours en contact avec les bandes métalliques correspondantes.

4. Dispositif d'encrage pour machine d'impression selon l'une quelconque des revendications précédentes, caractérisé par le fait que le réglage de la force de contact entre le rouleau d'encrage (5) et la table baladeuse (3) s'effectue à l'aide de paliers (13, 14) excentrés montés sur l'arbre (15), sur lesquels est monté le rouleau d'encrage (5), le réglage s'obtenant par rotation des paliers excentrés (13, 14) autour de l'arbre (15) faisant ainsi varier la distance séparant l'axe de rotation du rouleau d'encrage (5) et l'axe de la table baladeuse (3).

## Claims

1. An improvement in printing presses in which at least one inking roller (4, 5) is placed in rolling contact with two other rollers of which one is formed by a slide table (3), this inking roller being mounted pivotally about the axis of rotation of this slide table and mounted rotatably about a shaft (15), the corresponding slide table (3) being supported by two fixed bearings (18, 19), each comprising a cylindrical outer face (20, 21), characterised in that each end (22, 23) of the shaft (15) of the inking roller (4, 5) is connected to each corresponding fixed bearing (18, 19) through the intermediary of a flexible metal band (28, 29) bent in U shape, the central region of which partly surrounds the cylindrical face of the fixed bearing, being fixed thereto, and the two ends of which are fixed to the ends (22, 23) of the shaft (15) of the inking roller.

2. An improvement in printing presses as claimed in claim 1, characterised in that the ends of the metal bands (28, 29) are fixed to the ends of the shaft (15) through the intermediary of a fixing piece (26, 27), whilst the width of this piece (26, 27) is substantially equal to the diameter of the cylindrical outer face (20, 21) of the fixed bearings, so that the taut sides of the metal bands are substantially parallel.

3. An improvement in printing presses as claimed in either of claims 1 to 2, characterised in that the metal bands (28, 29) are fixed to the corresponding bearings (18, 19) by screws (34, 35, 36, 37), these screws being arranged on bearings in the region of the cylindrical faces (20, 21) always remaining in contact with the corresponding metal bands.

4. An improvement in printing presses as claimed in any of the previous claims, characterised in that the adjustement of the contact force between the inking roller (5) and the slide table (3) occurs by means of eccentric bearings (13, 14) which are mounted on the shaft (15) and on which the inking roller (5) is mounted, the adjustment being obtained by rotating the eccentric bearings (13, 14) about the shaft (15), thus varying the distance between the axis of rotation of the inking roller (5) and the axis of the slide table (3).

**Patentansprüche**

1. Farbwerk für eine Druckmaschine, in der wenigstens eine Farbwalze (4, 5) in Rollberührung mit zwei weiteren Walzen (1, 3) steht, von denen die eine durch einen Schiebetisch (3) gebildet ist, wobei diese Farbwalze an der Drehachse dieses Schiebetischs angelenkt und um eine Welle (15) drehbar ist, wobei der Schiebetisch von zwei feststehenden Lagern (18, 19) getragen wird, von denen jedes eines zylindrische Außenfläche (20, 21) hat, dadurch gekennzeichnet, daß jedes Endes (22, 23) der Welle (15) der Farbwalze (4, 5) mit jedem entsprechenden feststehenden Lager (18, 19) durch eine biegsames metallisches Band (28, 29) verbunden ist, das U-förmig gebogen ist und dessen mittlerer Bereich die zylindrische Fläche des feststehenden Lagers teilweise umgibt und dort befestigt ist, und dessen beide Enden an den Enden (22, 23) der Welle (15) der Farbwalze befestigt sind.

2. Farbwerk für eine Druckmaschine nach Anspruch 1, dadurch gekennzeichnet, daß die Enden des metallischen Bands (28, 29) an den Enden der Welle (15) durch ein Befestigungsteil (26, 27) befestigt sind, und daß die Breite dieses Teils (26, 27) im wesentlichen gleich dem Durchmesser der zylindrischen Außenfläche (20, 21) der feststehenden Lager ist, so daß die gespannten Enden der metallischen Bänder im wesentlichen parallel sind.

3. Farbwerk für eine Druckmaschine nach einem der Ansprüche 1 oder 2, dadurch gekennzeichnet, daß die metallischen Bänder (28, 29) durch Schrauben (34, 35, 36, 37) an den entsprechenden Lagern (18, 19) befestigt sind, wobei diese Schrauben in der restlichen Zone der zylindrischen Flächen (20, 21) angeordnet sind, die ständig mit den entsprechenden metallischen Bändern in Berührung steht.

4. Farbwerk für eine Druckmaschine nach einem der vorhergehenden Ansprüche, dadurch gekennzeichnet, daß die Einstellung der Berührungskraft zwischen der Farbwalze (5) und dem Schiebetisch (3) durch an der Welle (15) befestigte exzentrische Lager (13, 14) erfolgt, an denen die Farbwalze (5) gelagert ist, wobei die Einstellung durch Drehen der exzentrischen Lager (13, 14) um die Welle (15) erfolgt, wodurch der die Drehachse der Walze (5) und die Achse des Schiebetischs (3) trennende Abstand verändert wird.

Fig 1

0 099 767

Fig 2